Europäisches Patentamt

European Patent Office

Office européen des brevets

(19)

(11) Publication number: **0 087 649**

**A1**

(12) **EUROPEAN PATENT APPLICATION**

(21) Application number: 83101321.4

(22) Date of filing: 11.02.83

(51) Int. Cl.³: **A 47 J 43/24**
**A 23 N 12/00, A 47 L 15/32**

(30) Priority: 03.03.82 IT 1992982

(43) Date of publication of application:
07.09.83 Bulletin 83/36

(84) Designated Contracting States:
AT BE CH DE FR GB LI NL SE

(71) Applicant: **Poretti, Walter**
**P.O. Box 8**
**CH-6934 Bioggio(CH)**

(72) Inventor: **Poretti, Walter**
**P.O. Box 8**
**CH-6934 Bioggio(CH)**

(74) Representative: **Pipparelli, Claudio**
**c/o Centro di Consulenza in Proprietà Industriale Viale**
**Caldara 43**
**I-20122 Milano(IT)**

(54) **Machine for washing and drying fruit and/or vegetables.**

(57) A machine for washing and drying fruit and vegetables comprising a tank (4) in which a basket (8) filled with the products to be washed is supported by a telescopic hub (6) that moves downwards for plunging the basket into the water contained in the thank and washing the products by rotating the basket and by means of jets of fluid under pressure and then moves upwards, causing the thank coming out from the water, for rinsing the products by jets of water and drying them by centrifugation.

The machine is characterized by the fact that the drying stage of the products is performed by rotating the basket (8) by means of jets of air under pressure directed against several paddles provided on the external or on the lower surface of a wheel-like element supporting the basket. The drying stage is also performed by jets of air under pressure directed through the basket during its rotation.

Fig. 2

EP 0 087 649 A1

Croydon Printing Company Ltd.

The present invention concerns a machine for washing and drying fruit and/or vegetables comprising a tank in which a basket, or a bored container, filled with the products to be washed, is reached by jets of fluid under pressure. Machines for washing in water fruit or vegetables are known, they comprise a tank partially filled with water where fruit and/or vegetables contained in a basket are plunged and where jets of water or air make the basket or the products to be washed rotate. At the end of this washing stage the basket is manually or automatically removed from the water and some of such machines perform subsequent automatic stages of rinsing by jets of water and of drying by centrifugation.

The French Patent Application No. 81.10172 illustrates a machine for washing fruit and/or vegetables in which a basket filled with the products to be washed is connected to a tele scopic hub that moves downwards for plunging and washing the products by means of jets of water under pressure and moves upwards to remove the products from the washing water and perform subsequent stages of rinsing by jets of water and then drying by centrifugation. In both the lower and the upper positions, the basket is rotated by means of jets of water under pressure directed against a series of paddles that are provided on the lower surface of the hub. Althoug this machine performs a complete treatement of the products that are washed, rinsed and dryed, nevertheless it does not perfectly perform the stages of washing and drying. In fact, during the washing stage, neither the jets of water, nor the rotation of the basket are sufficient to separate the products from each other and to maintain them separeted and suspendend in the water so that the relative movement between the water and the products themselves can

cause removal of dirt; the drying stage performed only by centrifugation tends to accumulate the products against the side walls of the basket, thus preventing the water from leaving the products so accumulated, moreover the products are reached by water that performs the rotation of the basket.

The French Patent Application N. 78 01361 concerns a machine for washing fruit and vegetables in which the products plunged in water are reached by jets of air under pressure; French Patent N. 419 301 relates to a machine for washing food products comprising a tank, filled with water the upper part of which is used to wash the products by means of jets of air under pressure, and the lower part of which is used as a decantation chamber for washing water. Althoug the last two devices perform a good washing of the products, by means of air bubbles that separate the products from each other, nevertheless these two devices do not perform a complete treatement of the products that must then be rinsed and dryed.

The aim of the present invention is to propose a machine for washing and drying fruit and/or vegetables that performs a perfect washing of the products and in particular that performs a complete and soft drying of them by centrifugation and air blowing.

Another aim of the present invention is to provide a washing and drying machine, performing the above mentioned stages of washing, rinsing and drying, that, at the sametime, is very simple ans cheap.

Said aims are achieved by means of a machine for washing and drying fruit and/or vegetables comprising a tank in which a basket, or a bored container filled with the products to be washed is reached by jets of fluid under pressure, characterized by the fact that the drying stage of the products is performed by rotating the basket by means of jets of air under pressure directed against several paddles provided on the external, or on the lower, surface of a wheel--like element supporting the basket.

More in detail, the drying stage is also performed by jets of air under pressure directed through the basket during its rotation, and the wheel-like element together with its paddles is such that the air actuating the rotation and outcoming from the paddles, penetrates through the wheel-like element into the basket. The main advantage of the machine according to the present invention is that the products are completely dryed and not only so by centrifugation but also by air flow, thus avoiding too strong centrifugations which can damage the heaviest and/or most delicate products. Another advantage of this machine is that the drying stage is performed in a very simple and cheap way by means of an air compressor.

The machine according to the present invention will be now better described with reference to the attached drawings, illustrating a preferred embodiment of the machine and the different stages of a washing cycle and where:

- figure 1 is a front and cross-sectional view of the machine according to the present invention, where the supporting element and the bored container are illustrated in the two positions they assume during the washing cycle.

- Figure 2 is a front and cross-sectional view of another embodiment of the machine according to the present invention.

- Figure 3 is a magnified prospective view of the inside of the machine of Fig. 1 in which the pipes for the inlet of water and air under pressure and the bored container are indicated by partially dashed lines.

- Figures 4A-4B-4C are schematic front views of the machine of Fig. 1 illustrating the different stages of a washing cycle.

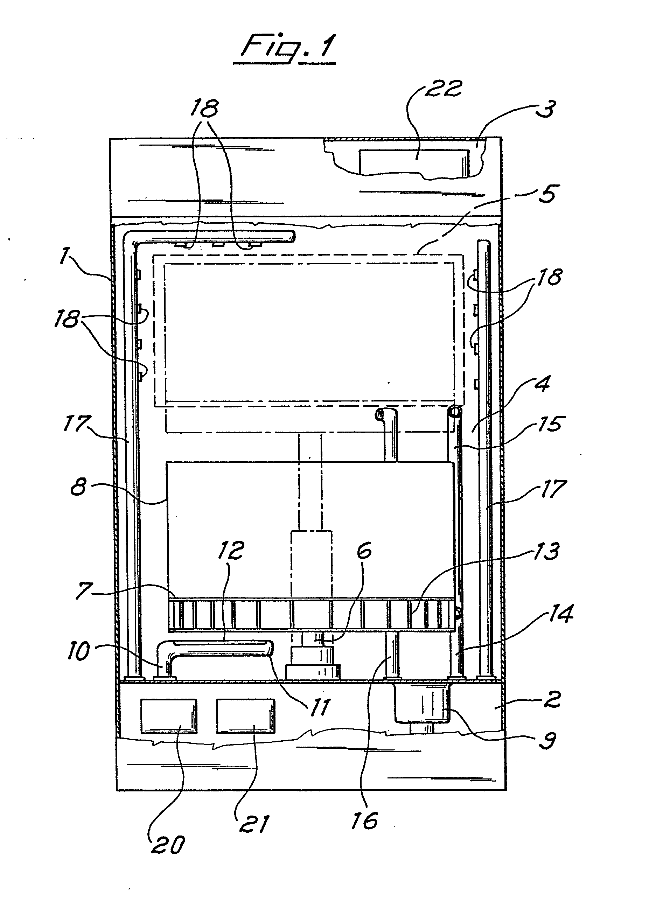

Referring first of all to figure 1, the machine according to the present invention is constitued, in a way known in itself, by a main structure 1, the lower and upper sections of which form spaces 2 and 3 respectively to house the operating parts of the machine (compressor 20, hydraulic pump 21) and the control devices 22 for automatic operation of the machine. Between the spaces 2 and 3 a pneumatically sealed tank 4 is provided equipped with a door 5 (illustrated by dashed line) to load and unload the machine, pneumatically sealed as well. On the bottom of the tank 4, a wired filter 9 is provided and it holds back the largest solid parts of dirt removed by the washing water.

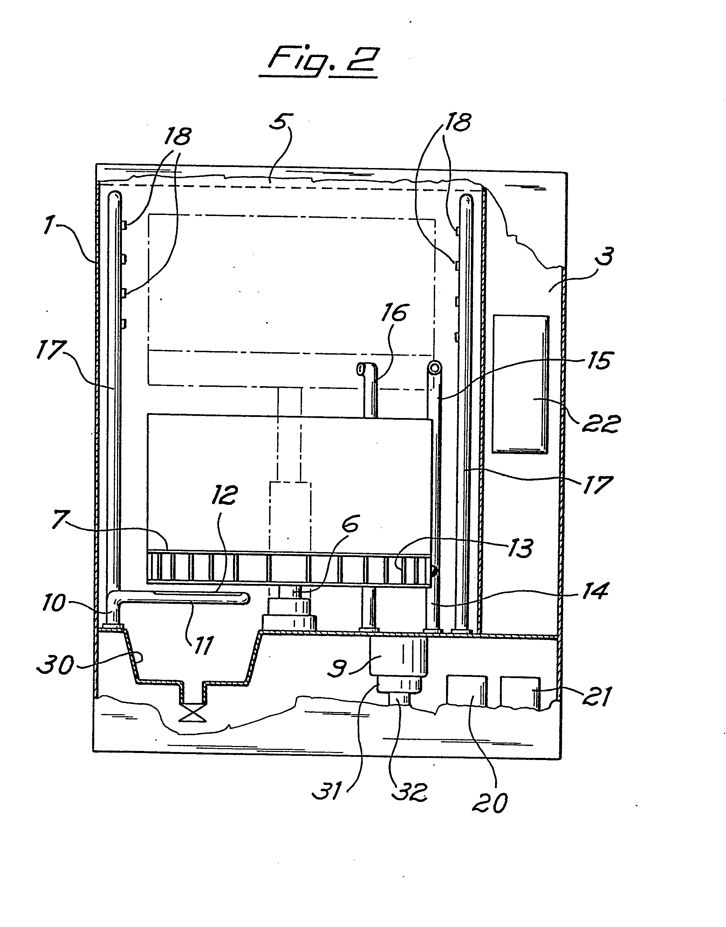

Figure 2 shows another embodiment of the machine in which the control devices 3 are laterally housed and the door 5 is provided in the upper surface thereof. Moreover, in order to prevent the parts of dirt from remaining suspendend in the water where the products are plunged and washed, a decantation chamber 30 on the bottom of the thank is provided; in addition to the wired filter 9, a special filter 31 for micro--organisms or smallest parts of dirt can be provided connected with the water intake 32 of the circuit for rotating the basket 8 by means of water under pressure.

Inside the tank 4, on a hydraulically operated telescopic hub 6, a wheel-like supporting element 7 is mounted in an idle way, on the external side surface of which there is a radial paddles 13 and to the upper base surface of which a bored container 8 is fixed.

From the bottom of the tank 4 a blind-bottomed L-shaped pipe 10 is protruding, the horizontal section 11 of which extends according to a radius of the base circumference of the supporting element 7 and it bears in its upper section a longitudinal fence 12 through which air under pressure coming from the compressor 20 is blown in from bottom to top through the bored container 8.

A washing cycle, as it will be described more in detail later on, comprises an initial washing stage in which the supporting element 7 and the bored container 8 are placed in the lower section of the tank 4, followed by two stages, of rinsing and dryind respectively, in which the supporting element 7 and the bored container 8 are in the upper section of the tank 4.

Each of the two positions reached by the supporting element 7 and by bored container 8 are automatically performed by the telescopic hub 6.

In each of the three stages of washing, rinsing and drying, the supporting element 7 and the bored container 8 are made rotate by means of jets of water or air under pressure directed perpendicularly to the paddles 13 of the supporting element 7 to which they yield most of their kinetic energy to determine their movement forward. For this purpose L-shaped pipes 14, 15, 16 are provided, having their horizontal sections oriented tangentially, to the supporting element 7 and positioned in such a way that the pipe 14 directs a jet of water under pressure against the paddles 13 of the supporting element 7 when the latter is in its lower position, while the pipes 15 and 16 direct jets of water and air under pressure respectively against the

0087649

paddles 13 of the supporting element 7 when the latter is in its upper position.

In particular, the paddles 13 of the supporting element 7 have such a configuration that during the drying stage the air outcoming from the pipe 16, after having hit the paddles and determined their movement forward, is conveyed towards the inside of the bored container where it helps to dry the products.

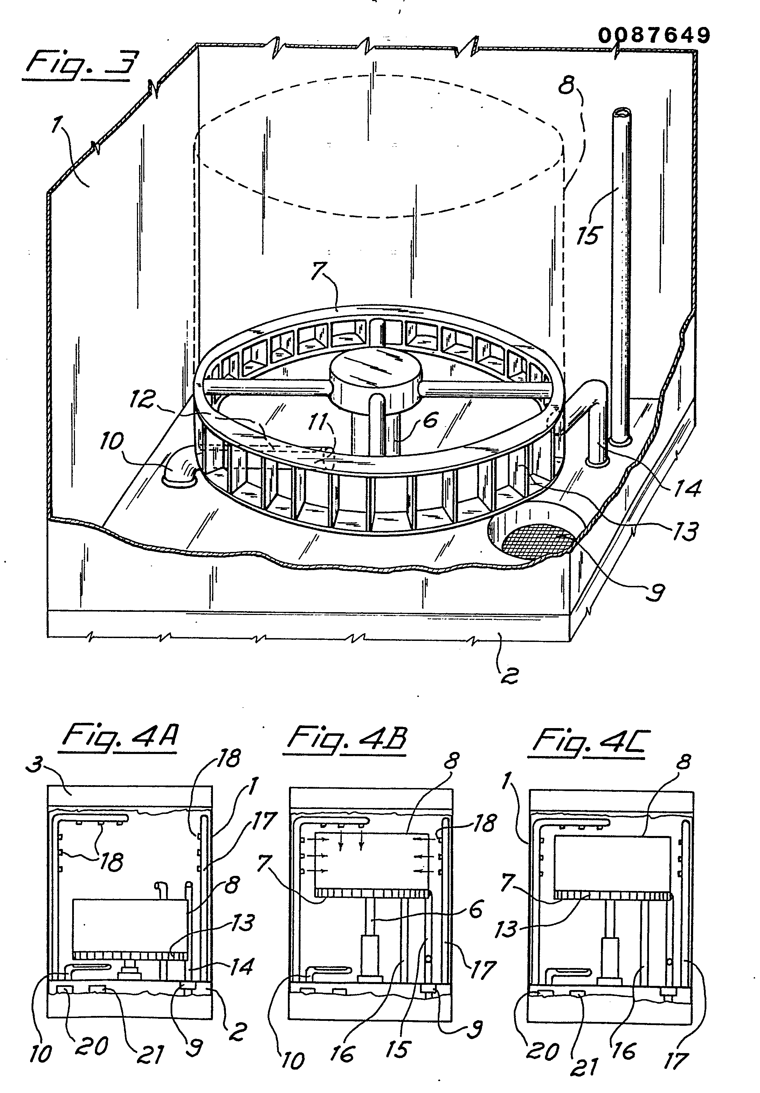

One or more pipes 17 (two in figure, placed on diametrically opposite sides of the bored container 8) in their upper section are provided with nozzles 18 through which, during the rinsing stage, jets of water under pressure are directed towards the bored container 8. Now referring to figures 3A-3B-3C, the different stages of a washing cycle carried out by the machine according to the present invention are hereinafter described.

At the beginning of the washing cycle, the operator places into the bored container 8 the fruit and/or vegetables to be washed and simultaneously the lower half of the tank 4 is filled with water. The bored container 8 is then fixed to the supporting element 7 which, in this initial stage, is in its upper position, the door 5 is closed and the machine is actuated by means of the automatic operating device. The telescopic hub 6 reaches its lower end position (figure 4A) causing complete immersion of the bored container 8. Through the filter 9, part of the washing water is drawn and made pass through the pump 21 which conveys it under pressure into the pipe 14 from which it is directed against the paddles 13 of the supporting element 8, causing its rotation. Simultaneously the compressor 20 sucks air from the external ambient and sends it under pressure into the pipe 10 from which it outcomes as air bubbles which, going upwards, pass through the bored container 8. As the bored container 8 moves in a rotatory way, a same section of the container alternative passes above the pipe 14 and the products in said section are alternatively reached by the bubbles. More in detail, the products which move in a rotatory way around the axis of the bored container 8 are alternatively reached by the air bubbles which come from the bottom and the superimposition of the rotatory movement of the products and the translatory movement from bottom to top of the air bubbles makes the products rotate around their axis when they pass above the pipe 14. Furthermore, the air bubbles separate the products from each other, maintain them, so separated, suspended in water and modify their relative position as well as their position with respect to the bored container 8, substantially obtaining conditions very similar to those of manual washing.

Finally, it must be noticed that, the bored container 8 being placed in rotation, it is sufficient to have only one pipe for blowing air from bottom to top. At the end of this first stage, the compressor discontinues the air flow through the pipe 14, while the telescopic hub 6 pushes upwards the supporting element 7 and the bored container 8 (figure 3B) causing their coming out from the washing water.

The water drawn from tank 4 is then sent by the pump 21 through the pipe 15 against the paddles 13 of the supporting element 7 causing its rotation and through the pipes 17 and the nozzles 18 against the container performing rinsing of the products.

At the end of the rinsing stage the pump 21 is switched off and the bored container is kept rotating by means of an air jet sent by the compressor 20 through the pipe 16 against the paddles 13 of the supporting element 7 (figure 3C). The air outcoming from the paddles 13 is conveyed, owing to the configuration of the paddles themselves, through the supporting element 7 into the bored container 8, where it helps to dry the products.

Moreover, other jets of air under pressure directed through the basket can be provided on the side walls of the tank.

In this way the products are dried not only by centrifugation but also by air flow obtaining the advantage of avoiding too strong centrifugations which might damage the heaviest and most delicate products.

Several modifications and changes can be made to the machine according to the present invention without for that escaping from the field of the present industrial patent. In particular, it is possible to use potentiometers according to the products to be washed, to regulate the pressure of the water and air jets which perform the stages of washing, rinsing and drying.

0087649

CLAIMS

1) A machine for washing and drying fruit and vegetables comprising a tank in which a basket or a bored container filled with the products to be washed is reached by jets of fluid under pressure, characterized by the fact that the drying stage of the products is performed by rotating the basket by means of jets of air under pressure directed against several paddles provided on the external or on the lower surface of a wheel-like element supporting the basket.

2) A machine according to claim 1 characterized by the fact that the drying stage is also performed by jets of air under pressure directed through the basket during its rotation.

3) A machine according to claims 1 characterized by the fact that the paddles and the supporting element together with its paddles are such that the air actuating the rotation and outcoming from the paddles, penetrates through the wheel-like element into the basket.

4) A machine according to claim 1, characterized by the fact that the washing of the products is performed by plunging them, while in the basket, into the water contained in the tank, by rotating the basket by means of jets of water under pressure directed against said paddles of the supporting element and by blowing air under pressure from the bottom to the top through one or more section of the basket.

5) A machine according to claim 4, characterized by the fact that the supporting element of the basket is supported by a telescopic hub that can hidraulically be moved from a lower position of immersion of the basket to an upper position in which the basket is above the washing water; by the fact that the side walls of the tank, in correspondence with the paddles of the supporting element and for both positions, upper and lower, are equipped with nozzles which direct jets of water under pressure against the paddles; and by the fact that in correspondence with the paddles of the supporting element in the upper position, nozzles are mounted which direct jets of air under pressure against the paddles to perform rotation.

6) A machine according to claim 4, characterized by the fact that a decantation chamber for washing water is provided on the bottom surface of the tank and a special filter for microoganisms and smallest parts of dirt is provided and is connected with the water intake of the circuit for rotating the basket by water under pressure.

Fig.1

*Fig. 2*

Fig. 3

Fig. 4A

Fig. 4B

Fig. 4C

European Patent
Office

**EUROPEAN SEARCH REPORT**

**0087649**
Application number

EP 83 10 1321

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-1 656 139 (BRETON)<br>* Page 2, lines 49-68; figure 1 * | 1,2 | A 47 J 43/24<br>A 23 N 13/00<br>A 47 L 15/32 |
| X | US-A-1 521 989 (BERGSTROM)<br>* The whole document * | 1,2 | |
| D,A | FR-A-2 378 577 (FONTANA)<br>* Page 5, line 17 - page 6, line 13; figures 4-6 * | 4 | |
| D,A | FR-A-2 482 851 (MEIKO)<br>* The whole document * | 1,5,6 | |
| A | CH-A- 252 985<br>(SCHMIDLIN-BOHNY)<br>* The whole document * | 4 | |
| | | | **TECHNICAL FIELDS SEARCHED (Int. Cl. ³)** |
| A | DE-C- 719 909 (GUTSCHER)<br>* The whole document * | 4 | A 47 J<br>A 23 N<br>A 47 L |
| D,A | FR-A- 419 301 (FINK) | | |

The present search report has been drawn up for all claims

| Place of search | Date of completion of the search | Examiner |
|---|---|---|
| THE HAGUE | 08-06-1983 | SCHARTZ J. |